Europäisches Patentamt

European Patent Office

Office européen des brevets

Publication number: **0 275 838**
**A1**

# EUROPEAN PATENT APPLICATION

Application number: 87830425.2

Date of filing: 30.11.87

Int. Cl.⁴ **A23L 1/16**

Priority: 18.12.86 IT 2275786

Date of publication of application:
27.07.88 Bulletin 88/30

Designated Contracting States:
AT BE CH DE ES FR GB GR LI LU NL SE

Applicant: "BARILLA G.E.R. F.LLI:Societa per Azioni"
V.Le Riccardo Barilla, 3/A
I-43100 Parma(IT)

Inventor: Guarneri, Roberto
Via Orazio, 40
I-43100 Parma(IT)

Representative: Vannini, Torquato et al
JACOBACCI-CASETTA & PERANI S.p.A. 7 Via
Visconti di Modrone
I-20122 Milan(IT)

**A method of producing newly made pasta products for long term preservation.**

A method of producing commercially newly made "pasta" products comprises a pasteurization step followed by a drying treatment effective to cause the final food product to achieve a moisture content of 25% and a lower Aw value than 0.87. The products are packaged under an inert gas atmosphere and thereafter heat stabilized.

EP 0 275 838 A1

This invention relates to a method of producing newly made "pasta" products commercially, in particular but not exclusively newly made "pasta" products formed from durum wheat flour and eggs, both plain and stuffed. With stuffed pasta products, the stuffing matter is apt to include meat, cheese, bread, vegetables, odors, spices, and so forth.

Throughout the ensuing description and the appended claims, the term "newly made pasta product" refers to a pasta product, whether stuffed or plain, produced on a commercial scale and having a moisture content in the range of 25% to 30% by weight, thereby it will feel soft and springy to the touch like any traditional fresh homemade pasta products.

It is a known fact that the technical problem to contend with in the commercial-scale production of newly made pasta products is that of ensuring its preservability. A first and highly important aspect of that problem relates to the wholesomeness of the products as made and then delivered for sale. In fact, already within a very short time of 2 to 3 days from preparation, newly made pasta products undergo rapid and substantial alteration, of bacterial and chemical characters, which results in an unacceptable deep deterioration of their original organoleptic features, and most importantly, the development of toxic agents. In this respect, it should not be overlooked that contamination of newly made pasta products is consequential to the ingredients used as well as the handling to which they have been subjected during the production process, which means the attending personnel and the work environment itself. The microflora which appears is sure to downgrade the finished product and may be pathogenic for the consumer, who cannot rely on just the pasta cooking process, given that heat-stable toxins are present. The microbial species vary with the ingredients, and are mostly attributable to the eggs and the stuffing ingredients, where provided. Such species include, in particular, molds and leavens, enterobacteria, staphylococci, clostrides, and bacilli.

A second, and no less important aspect of the newly made pasta product preservability problem is that of retaining its original organoleptic properties, i.e. taste, smell and outward appearance, as their quick deterioration is a universally recognized fact.

Some of the demand for newly made pasta products is currently met by products wherein preservability (wholesomeness and organoleptic properties) is achieved by utilization of the cold, specifically by freezing freshly prepared food products at -20°C to -25°C, or chilling them at about 2°C to -4°C.

This technique is recognized to be a complex one in that it involves creation of a suitable low-temperature product trade chain encompassing production, packaging, storage, transportation, display and sale, in such environmental conditions of temperature and humidity as are not easily achieved, difficult to maintain, and altogether uncontrollable.

The problem underlying this invention is that of providing a method as indicated which can yield long term preservation newly made pasta products with organoleptic and wholesome features which are constant and the same as those of the products as freshly prepared, and such that they can be delivered to normal trading channels without involving any special and expensive protective measures of the kind of a cold trade chain or the like.

This problem is solved according to the invention by a method characterized in that it comprises the steps of,

providing a dough for sequential processing, formed from selected ingredients, having a water content of about 30% to 32%, and incorporating a preset amount of a water secluding agent;

forming food products optionally including a filling;

pasteurizing said food products;

partially drying the pasteurized products down to a water content of about 25% and a water activity Aw below 0.87;

packaging the products under an inert gas atmosphere into substantially oxygen-impervious containers; and

heat stabilizing the packaged products.

In particular, and advantageously, the water secluding agent used in the starting dough comprises sodium chloride (ordinary salt). The amount of sodium chloride employed will be selected on the one side to result, at the end of the partial drying step, in products having a lower Aw than 0.87, preferably within the 0.84 to 0.87 range, and on the other side products which, on being boiled without adding salt to the water or with mild salting, yield a food product which is salted "to the right point".

Of course, any filling used in forming the food product according to the invention may be in turn additivated with a respective amount of a water secluding agent, specifically and advantageously with sodium chloride (ordinary salt) to contribute toward keeping the Aw within desired values.

The newly made food products to be obtained on a commercial scale through the method of this invention, by having a moisture content around 25%, have constantly offered to the tough a degree of softness and springiness comparable with homemade like products.

Furthermore the heat treatments ensure destruction of molds and leavens, and of enterobacteria as well as any staphylococci. The water activity value Aw, being controlled within the range of 0.84 to 0.87, ensures inhibition of the growth of heat-resisting micro-organisms, such as clostrides and bacilli. For these reasons, the newly made pasta products obtained with the method of this invention have shown quite surprising preservability, extended over a period of up to 6-7 months.

The products can therefore be delivered to normal trade channels, without requiring any special protective measures of the kind of refrigerated chains or the like, but with the mere application of an appropriate packaging procedure effective to form a barrier against oxygen.

Further features and the advantages of this invention will be more clearly understood from the following detailed description of an exemplary embodiment of the inventive method as applied to the making of long term preservation newly made "tortellinis".

A filling paste was prepared using the following ingredients in quite a conventional manner:
Stewed meat,
Ground biscuit,
Vegetable fat in lumps,
Raw "prosciutto" ham in lumps,
Grated "Parmigiano Reggiano" cheese, and
Naturally occurring odors.

Following mixing, fine milling, and further mixing, the filling composition was conveyed to forming.

A foil is prepared separately from dough of durum wheat flour and eggs (four eggs per kilogram flour), plus ordinary salt in an amount ranging from 3% to 5% of the durum wheat flour and a sufficient amount of water.

The resulting dough had a solid-to-plastic consistency and a moisture content of 32%. This dough was then subjected to foil-like layering, and the foil thus obtained was in the form of an elastic solid having a moisture content of 30%.

The foil was then taken to forming, whereat "tortellinis" were produced with the filling specified above.

The "tortellinis" yielded by this step had a moisture content of 30% and the features of elastic solids, soft to the touch. The resulting "tortellinis" were then subjected to a pasteurization heat treatment at a temperature in the 97°C to 102°C range for a period of 120 seconds. At the end of this treatment, the moisture content of the "tortellinis" was still around a value of 30%.

Thereafter, the "tortellinis" were subjected to partial drying in an environment maintained at a temperature of 84°C and relative humidity of 23%. This treatment was carried out over a period of 7 minutes, and on completion, the moisture content of the "tortellinis" had dropped to 25%, with the water activity Aw at 0.87.

The "tortellinis" thus obtained were fed into a packaging station whereat they were packed into containers under an inert gas environment, which containers were then sealed, they being formed from a suitable, substantially oxygen-impervious material. Following heat stabilization in a microwave oven at 90°C for about 8 minutes, the packaged product was taken to storage, and samples of it were picked up periodically and subjected to examination of its moisture content, water activity Aw, and bacterial charge.

The results are summarized in the following Table.

<u>TABLE</u>

| | Min. | Max. |
|---|---|---|
| Moisture content | 23.90 | 26.74 |
| Water activity | 0.86 | 0.89 |
| Bacterial charge at zero time | 25 | $1.2 \times 10^4$ |
| Bacterial charge after 1 week | $6.1 \times 10^2$ | $3.1 \times 10^4$ |
| Bacterial charge after 2 weeks | $5.0 \times 10^2$ | $5.0 \times 10^4$ |
| Bacterial charge after 3 weeks | $3.0 \times 10^3$ | $9.0 \times 10^4$ |
| Bacterial charge after 1 month | $5.5 \times 10^2$ | $1.1 \times 10^4$ |
| Bacterial charge after 2 months | $5.0 \times 10^2$ | $2.4 \times 10^3$ |
| Bacterial charge after 3 months | | $8.7 \times 10^3$ |
| Bacterial charge after 4 months | | $1.2 \times 10^3$ |
| Bacterial charge after 5 months | | $1.3 \times 10^2$ |
| Bacterial charge after 6 months | | $2.0 \times 10^3$ |
| Bacterial charge after 7 months | | $5.0 \times 10^3$ |
| Bacterial charge after 8 months | | $9.5 \times 10^3$ |

Examination for other micro-organisms conventionally present in such product types. some of which being even of pathogenic significance, invariably yielded total absence. In particular, the presence of staphylococci, molds, enterobacteria, leavens, and clostrides was checked.

## Claims

1. A method of producing commercially newly made pasta products for long term preservation, both plain and stuffed, characterized in that it comprises the steps of:
   providing a dough formed from selected ingredients, having a water content of about 30% to 32%, and incorporating a preset amount of a water secluding agent;
   forming food products from said dough, optionally including a filling;
   pasteurizing said food products;
   partially drying the pasteurized products down to a water content of about 25% and a water activity Aw below 0.87;
   packaging the products under an inert gas atmosphere into substantially oxygen-impervious containers; and
   heat stabilizing the packaged products.

2. A method according to Claim 1, characterized in that said water secluding agent is sodium chloride (ordinary salt).

3. A method according to Claim 2, characterized in that sodium chloride is used in an amount between 2.5% and 3.5% by weight of the starting ingredients.

4. A method according to Claim 1, characterized in that on completion of the partial heat drying step, the pasteurized products have an Aw value in the 0.84 to 0.87 range.

5. A method according to Claim 1, characterized in that said packaged product heat stabilizing step is carried out at a temperature in the 90°C to 100°C range over a time period of 2 to 10 minutes.

6. A method according to Claim 5, characterized in that said heat stabilizing step is carried out by using high or very high frequency electromagnetic energy.

7. A method according to Claim 1, characterized in that said filling includes a preset amount of a water secluding agent.

8. A method according to the preceding claim, characterized in that said water secluding agent is sodium chloride (ordinary salt).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 529 609 (D. GAEHRING) * Claims 4,7,10; example 1 * | 1-4 | A 23 L 1/16 |
| Y | EP-A-0 051 171 (M. FIORAVANTI) * Claims 1-3; page 6, line 25 - page 7, line 3 * | 1-4 | |
| A | EP-A-0 012 255 (SOC. DES PRODUITS NESTLE) * Claim 1; example 5; page 5, lines 23-33 * | 1,4,5,6 ,7,8 | |
| A | EP-A-0 139 813 (HARADA HARUO) * Claims 1,6,7,10; page 3, line 27 - page 4, line 3; example 5 * | 1-3,5 | |

TECHNICAL FIELDS SEARCHED (Int. Cl.4)

A 23 L

The present search report has been drawn up for all claims

| Place of search | Date of completion of the search | Examiner |
|---|---|---|
| THE HAGUE | 24-03-1988 | DESMEDT G.R.A. |